# EUROPEAN PATENT APPLICATION

(11) **EP 1 696 660 A2**
(43) Date of publication of application: **30.08.2006**
(21) Application number: 06251005.2
(22) Date of filing: 24.02.2006
(51) Int. Cl.: H04N 1/44

(54) **Personal mailbox**

(30) Priority: 25.02.2005 GB 0503930
(71) Applicant: CANON EUROPA N.V., NL-1185 XB Amstelveen (NL)
(72) Inventor: Parks, Benjamin John, Reading, Berkshire RG6 3UF (GB); Ayling, Julian John, Hertfordhire, HP23 4ET (GB)
(74) Representative: Burt, Matthew Thomas

(57) **Abstract**

A personal print mailbox software application for printing or peripheral device, such as a photocopier, is disclosed. Documents received on the printing device have associated information sent with them identifying the user logged in on the workstation that sent them. Documents from various users are collected in a common storage area or mailbox on the printing device. When a user visits the printing device to select documents of his or hers to print the user logs in to the photocopier. The application verifies the log in against the same user identity / security system, such as Windows Active Directory, that was used to log the users into their workstations. The application then presents the user with a list of his or her documents only, from which he or she may select documents, for example, to print.

## Description

The present invention relates to printing on a computer network.

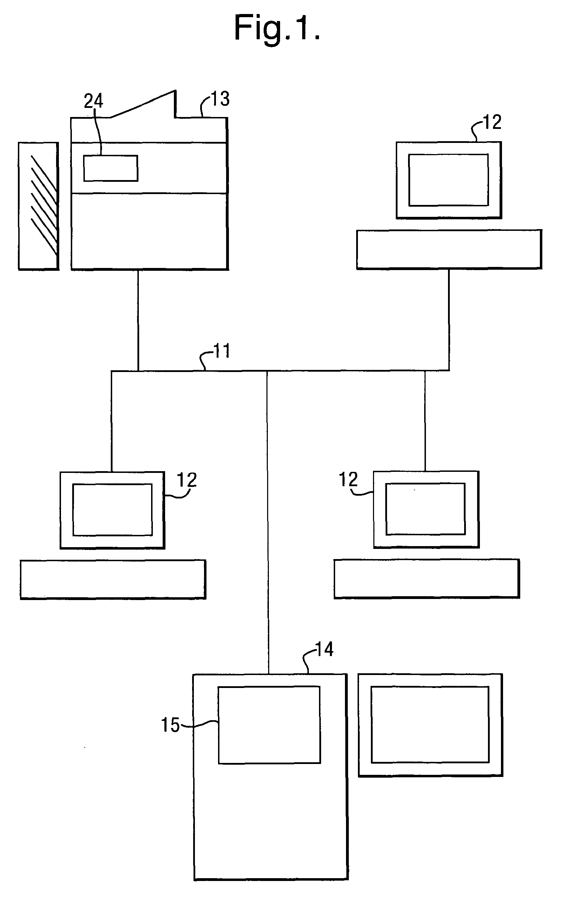

Figure 1 shows a known computer network system typical of those in which the invention is used. A network 11 has connected to it several computer workstations 12, a peripheral device, in particular a photocopier 13, and a server 14. The workstation 12 is a standard personal computer. The server 14 is a network server that contains a security program module 15 including identity details for users of the network system. The photocopier has a touch-sensitive screen 24 through which the user can control the peripheral.

The workstations 12 are, for example, standard personal computers. If a user wishes to use one of the workstations 12, they must first log on, by entering their username and password into the workstation. These are then transmitted to and checked by the security program 15 on the server 14, and if they are correct the user is logged on. This kind of log on is usually referred to as "logging on to the network" and gives the user access to the workstation and server resources. The server 14 may be, for example a server running an operating system such as Windows Server 2003™ or Red Hat Linux™. In Windows 2003 the security module that identifies users and verifies log ins is called Active Directory™.

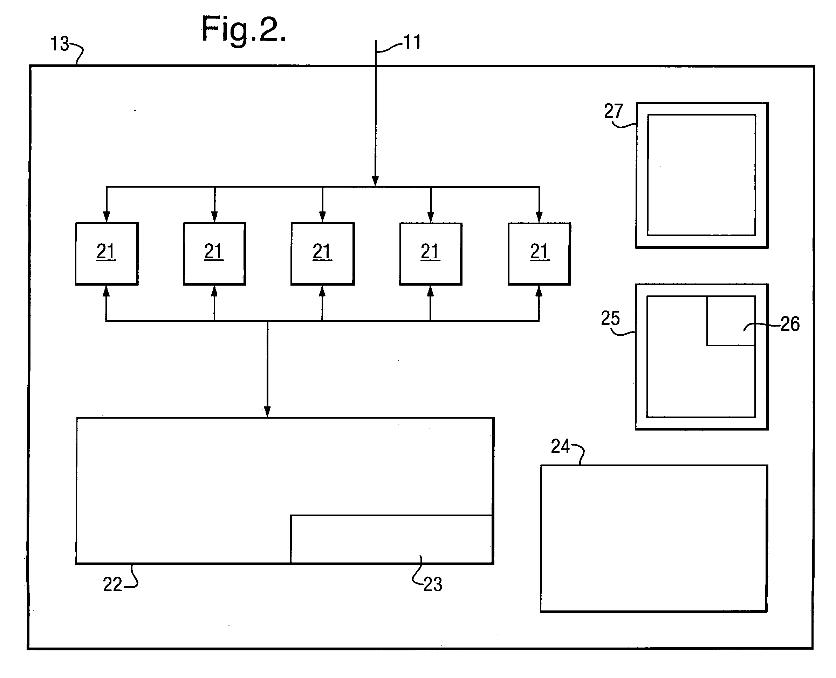

The photocopier 13 is, for example, a Canon photocopier from the iRi 5000-6000 series. The photocopier 13 has control unit 22 (see Figure 2) that contains a microprocessor (not shown) which runs the Multifuntion Embedded Application Platform (MEAP) as is known in the art. The MEAP platform 23 allows applications written in a Java-type language to be installed and run on the photocopier 13 (these are known as "MEAP applications"). These applications can then control the operation of the photocopier 13, and can display information to and receive input from a user via the touch-sensitive screen 24.

The photocopier also contains a hard disc (not shown) on which a number of documents can be stored prior to printing. Each document contains a variety of information, including the actual content to be printed, the identity of the user who printed the document, etc.. The documents are stored in a number of separate storage areas on the hard disc, which are known as "mailboxes" 21; these mailboxes 21 can be used by MEAP applications. On one particular photocopier of the iRi 5000- 6000 series there are 100 mailboxes, each of which can hold up to 100 documents. Different photocopiers may have different numbers of mailboxes, with different storage capabilities. However the structure and sizes of the mailboxes 21 are fixed by the architecture of the photocopiers control system.) Mailboxes can be assigned a name and/or a "PIN" number. If a mailbox has a PIN number, the contents of a mailbox can then only be accessed using that PIN, for example by a user entering the PIN on the touch-sensitive screen 24, or a MEAP application using the PIN when accessing the mailbox via the MEAP platform. Items 25 , 26 and 27 are not provided in the prior art and is provided by the present invention. They are described later below.

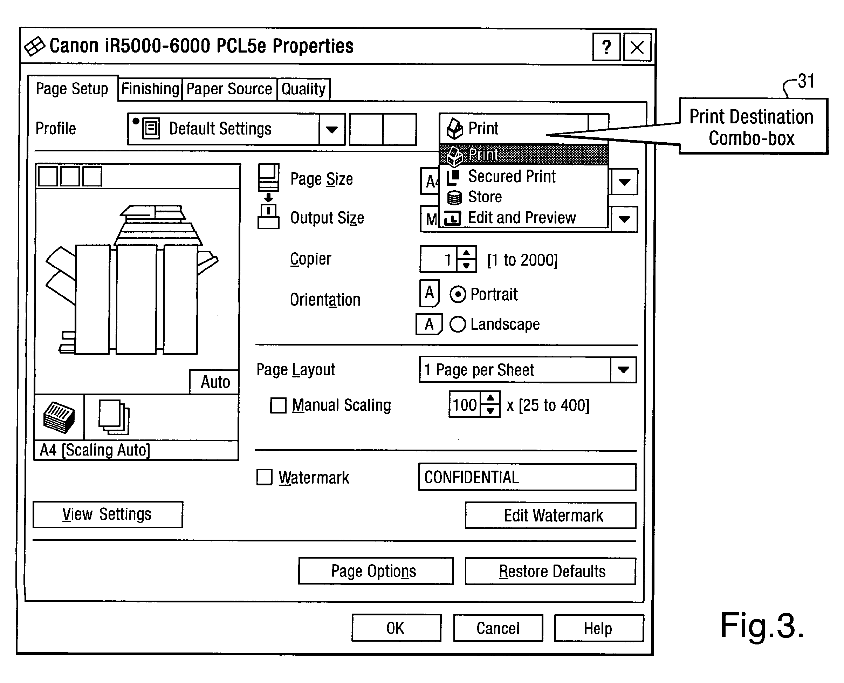

Any of the workstations 12 is able to print documents on the photocopier 13 via the network 11. The settings used for printing a document are controlled on the workstation 12 by a photocopier driver, a user interface for which is shown in Figure 3. Amongst other things, a user can control the destination for a document via the print-destination box 31.

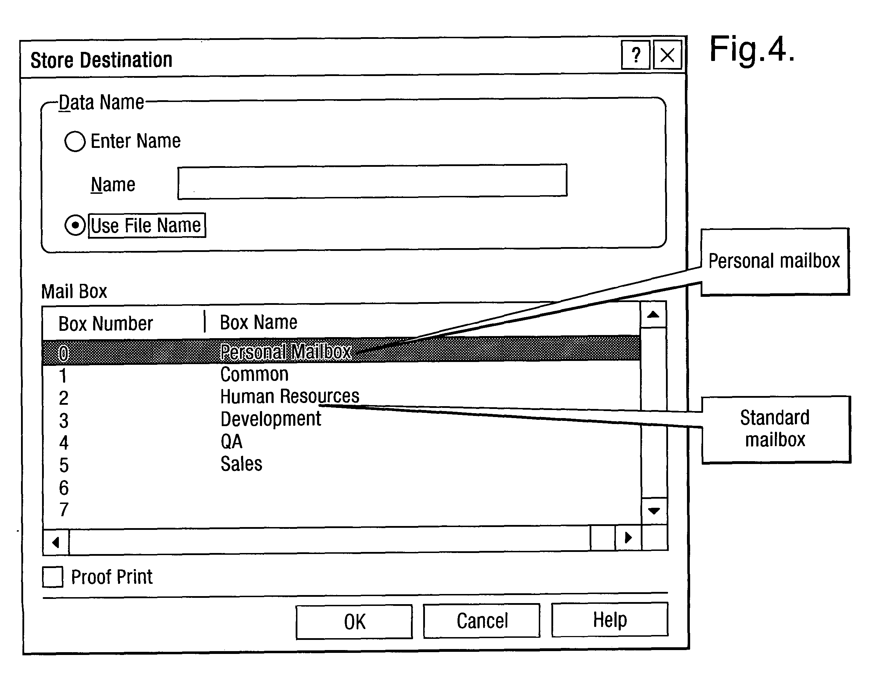

If the "Store" option is selected in the print-destination box 31, a further user interface as shown in Figure 4 is displayed. This shows the mailboxes, with names if assigned. The user can then select a mailbox on the photocopier 13 in which to store the document prior to printing. Typically, a mailbox will be assigned to a person or set of people (for example, the mailbox number "3" is assigned to "Human Resources"), and given a PIN number. Only that person or set of people will know the PIN for that mailbox, and so they are able to store their documents on the photocopier without them being accessible to other people. (Note that although Figure 4 in general shows the interface as known in the prior art mailbox 0 in the Figure has been configured for use in the invention as is explained later below).

Once a document has been "printed" (i.e. sent) from the workstation 12 and stored on the photocopier 13 in their mailbox, the user can at a later time access their mailbox from the photocopier 13, using their PIN, and cause the document to be actually printed out onto paper. In this way they are able to get a hard copy of their document without it being accessible to people who do not have the PIN number. This is all done using the standard functionality of the MEAP platform.

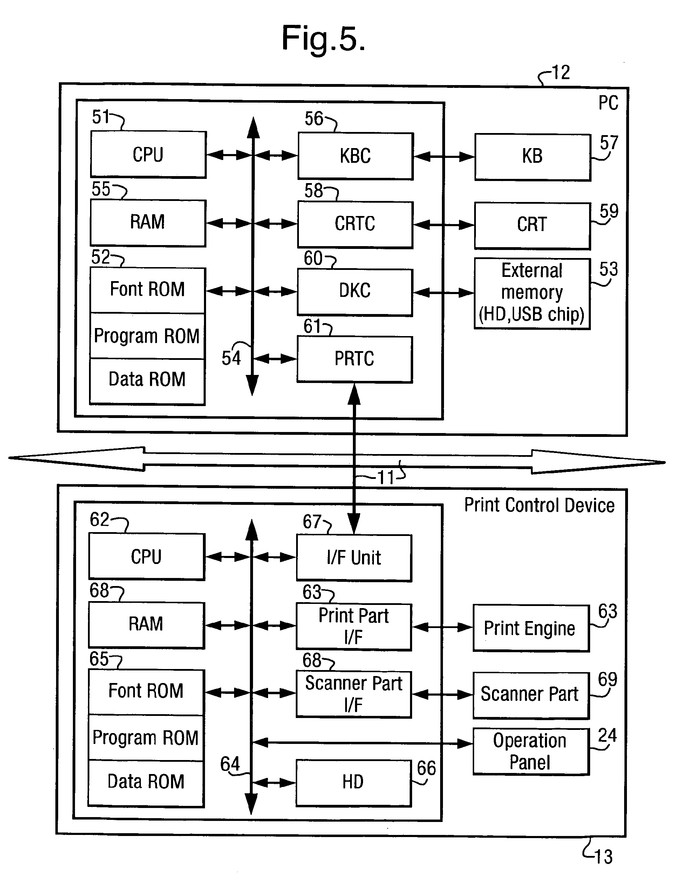

In Figure 5, which shows some details of the devices, reference numeral 12 denotes one of work stations shown in Fig. 1, and includes a CPU (central processing unit) 51 which executes processing on documents including a combination of graphics, images, characters, tables (including spreadsheets), etc., based on a document processing program, etc., stored in a program ROM of a ROM (read only memory) 52 or an external memory 53 (HD, USB, chip and so on). The CPU 51 integrally controls each of the devices connected to a system bus 54. Also, the program ROM of the ROM 52 or the external memory 53 stores an operating system (OS), which is the control program of the CPU 51, a font ROM of the ROM 52 or the external memory 53 stores font data, etc., to be used for the document processing described above, and a data ROM of the ROM 52 or the external memory 53 stores various data to be used. Reference numeral 55 denotes a RAM (random access memory), and functions as a main memory, a work area, etc., of the CPU 51.

Reference numeral 56 is a keyboard controller (KBC), and controls the input from a keyboard 57 and an unillustrated pointing device. Reference numeral 58 is a CRT controller (CRTC), and controls the display of a CRT (cathode ray tube) display 59. Reference numeral 60 is a disk controller (DKC), and controls the access to and from the external memory 53 such as a hard disk (HD), a USB memory chip, etc., which store a boot program, various applications including applications needing print facilities and print drivers, font data, user files, edit files, etc.

Reference numeral 61 is a print driver (PRTC), which is connected to a photocopier 13 via the network 11, and executes communication control processing with photocopier 13. In this regard, CPU 51 executes, for example, outline-font expansion (rasterization) processing into a display information RAM, which is set in RAM 55, and provides WYSIWYG (what you see is what you get) on CRT 59. Also, CPU 51 opens various registered windows, and executes various data processing based on the commands instructed by an unillustrated mouse cursor, etc., on CRT 59. The user can perform a print process for photocopier 13 described below.

In photocopier 13, reference numeral 62 is a CPU. CPU 62 outputs an image signal as output information to a print part (printer engine) 63 connected to a system bus 64 based on the control program, etc., stored in a program ROM of a ROM 65 or the control program, etc., stored in a hard disk HD 66. Also, the program ROM of the ROM 65 stores a control program, etc., of the CPU 62. A font ROM of the ROM 65 stores font data, etc., to be used when the above-described output information is created. A data ROM of the ROM 65 stores information, etc., to be used when the photocopier 13 does not have a hard disk (HD) 66, etc.

CPU 62 is capable of performing communication processing with the work station 12 through an I/F unit 67. Reference numeral 68 is a RAM which functions as a main memory, a work area, etc., of CPU 62, and the memory capacity thereof can be expanded by an optional RAM connected to an unillustrated expansion port. In this regard, the RAM 62 is used for an output information expansion area, environment data storage area, an NVRAM (Non-Volatile RAM), etc.

HD 66 stores font data and documents files in mailboxes 21. Reference numeral 68 is a scanner part interface and controls documents scanned by scanner part 69 (scanner engine). The scanned document may be printed by print engine 63 or sent to a work station 12.

According to the present invention there is provided a document mailbox software application for use on a peripheral device, the application being arranged, when executed on the peripheral device, to perform the following steps:
logging in a user to the peripheral device, the log in identifying the user against an electronic user identity system,
selecting, from documents, in electronic form, stored in the peripheral device, documents that have associated information sufficient to imply that the documents belong to the logged in user as identified,
allowing the logged in user access to the selected documents,
wherein the associated information implies that the documents belong to the logged in user as identified against an electronic user identity system identifying the user with the associated information, and wherein the electronic user identity system is located on another device

The present invention also provides a method of a peripheral device connected to another device via a network, the method comprising the steps of:
logging in a user to the peripheral device, the login identifying the user against an electronic user identity system,
selecting, from documents, in electronic form, stored in the peripheral device, documents that have associated information sufficient to imply that the documents belong to the logged in user, and
allowing the logged in user access to the selected documents,
wherein the associated information implies that the documents belong to the logged in user as identified against an electronic user identity system identifying the user with the associated information, and wherein the electronic user identity system is located on another device..

The present invention further provides a peripheral device connected to another device via a network, the device comprising a controller arranged to perform the steps of:
logging in a user to the peripheral device, the log in identifying the user, the log in identifying the user against an electronic user identity system,
selecting, from documents, in electronic form, stored in the peripheral device, documents that have associated information sufficient to imply that the documents belong to the logged in user, and
allowing the logged in user access to the selected documents,
wherein the associated information implies that the documents belong to the logged in user as identified against an electronic user identity system identifying the user with the associated information, and wherein the electronic user identity system is located on another device.

Further aspects of the invention provided are detailed in the appended claims and will be apparent from the embodiments disclosed below.

There will now be described embodiments of the invention, with reference to the accompanying drawings of which:
Figure 1 shows an exemplary computer network system in which the invention may be used;
Figure 2 is a block diagram of a photocopier;
Figure 3 is a screen provided by the print driver for the photocopier;
Figure 4 is a further screen provided by the printer driver for the photocopier;
Figure 5 is a detailed diagram of the components of a workstation and of the photocopier;
Figure 6 is a flow diagram of the process of selecting documents for a user;
Figure 7 is a log in screen presented on the photocopier;
Figure 8 is a display of the list of documents;
Figure 9 is a block diagram showing the overall organisation of the mailboxes in the Virtual Mailbox application which may be used with the present invention;
Figure 10 is a flow diagram showing the process of storing a document that has arrived in the In Box of the Virtual Mailbox application, in a first embodiment;
Figure 11 is a flow diagram showing the process of storing a document that has arrived in the In Box, in a second embodiment.

In accordance with a first example of the invention, a MEAP application 25 called "Personal Mailbox" is provided on the photocopier 13 (see Figure 2). This functions to improve the mailbox structure as follows.

On initialisation this application selects a mailbox 21 on the device, in this case mailbox "0", and assigns it the name "Personal Mailbox" and a PIN number. The PIN number is not known to users of the network since the Personal Mailbox application does not allow access to it.

As before, a user wishing to use a workstation 12 (seeFigure 1) logs on to the network using their username and password. These details are checked by the server 14. They can then print a document from their workstation by selecting a mailbox on the photocopier 13 in which to store the document. However, each user now selects, in order to use the invention, the mailbox previously reserved by the application, namely "Personal Mailbox", mailbox "0". All users using the invention print in the same way, i.e. to mailbox "0".

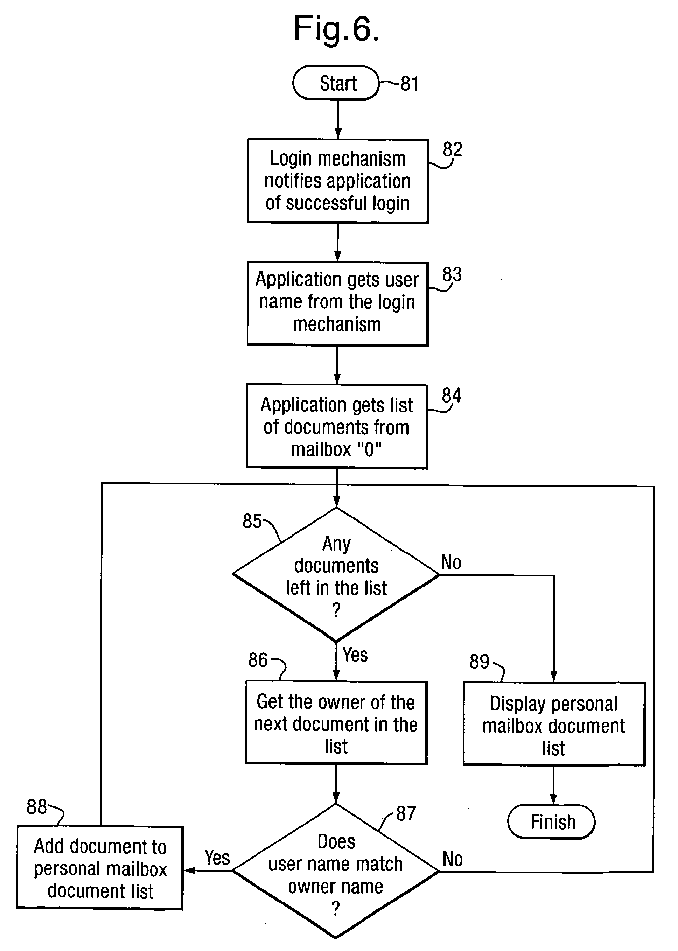

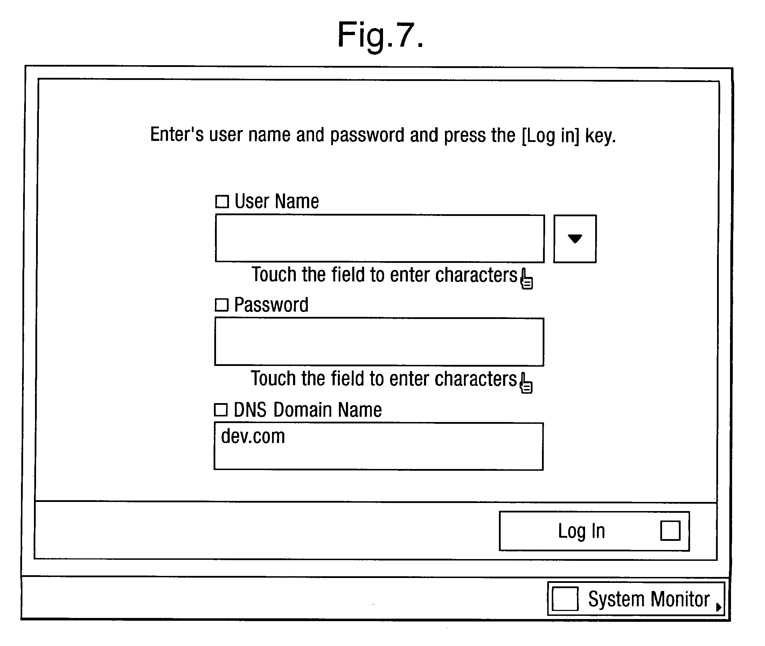

When the user wishes to get the hard copy of their document at the photocopier 13, they are not now able to see the contents of the Personal Mailbox, as they do not know its PIN. Instead, the user selects the "Personal Mailbox" MEAP application on the photocopier, using the touch-sensitive screen 24. This starts the process as shown in Figure 6. After the process has started (step 81), the user is required to log on to the photocopier 13 with their username and password, using the MEAP login program, the user interface of which is shown in Figure 7. The log in process is handled in the invention by a security program 26 (see Figure 2) provided as part of the Personal Mailbox application. This then sends the user's details to the security program on the server 14 and are checked similarly to when logging on to the workstation 12, and if they are correct the user is logged on, and the security program 15 on the server notifies the login program 26 on the photocopier, which in turn notifies the Personal Mailbox application 25 that login has been successful (step 82). In this way, the identity of the user has been verified at the workstation and at the photocopier against the source, i.e. security program 15 on the server 14. (If the user has already logged on to the photocopier the step does not need to be repeated.)

Once the user has logged on to the photocopier 13, the Personal Mailbox application requests, from the login program 26, the username used by the user to log in (step 83). It then requests a list of the contents of the Personal Mailbox, mailbox "0", using the PIN it assigned to that mailbox (step 84). This request is preferably made using the standard interface provided by the control unit 22 for the purpose.

The application 25 then filters the list of contents of the Personal Mailbox to give the user's Personal Mailbox document list: that is, a list of the documents where the details of the user who printed the document (those details originating from when the user logged on to the workstation from which the document was printed and being sent by the workstation print driver with the content of the print) match the details of the user of the application 25 (obtained when the user logged on to the photocopier 13). The filtering is done as follows.

The application starts with the Personal Mailbox user document list empty. First, the application checks if there are any documents in the list of contents of the Personal Mailbox, mailbox "0", that it has not yet considered (step 85). If there are, the application requests the details of the owner of the next unconsidered document in that list; that is, the username of the user who was logged on to the workstation from which that document was sent (step 86). The application then compares the username of the user logged on to the photocopier 13 with the username of the owner of the document (step 87). If the names match then the document is added to the Personal Mailbox user documents list (step 88), and the application returns to step 85. If the names do not match, the document is not added to the user list, and the application again returns to step 85.

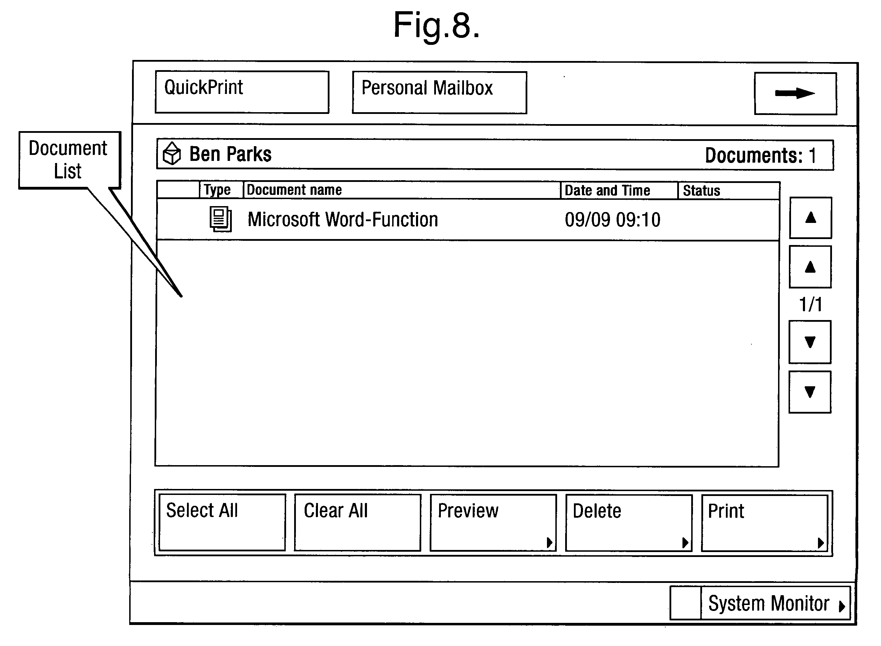

At step 85, if there are no unconsidered documents left in the list, then the filtering is finished. The Personal Mailbox user document list as obtained in this way is then displayed (step 89) on the touch-sensitive screen 24, as shown in Figure 8. The user can then select a document or documents to be printed from their list of documents. (In the example of Figure 8 there is only one document to select from, a "Microsoft Word" document.)

In this way a user is given the impression that the Personal Mailbox belongs to them only, when of course mailbox "0" contains documents from all users using the application 25.

Alternatively, the application may in certain circumstances display documents for other users as well as those for the user logged on to the photocopier. For example, a user logged on as "Administrator" would be able to view documents for all users. As another example, some documents may not have user information (say if printed from a machine for which logging on is not required), and these documents would preferably be displayed for all users.

As another alternative, the application 25 may not display the documents, but perform some other action based on the filtered list, for example printing each document.

In the embodiment above the user logs in the workstation and photocopier by giving it both a user name and password. The verification of the user's identity at both the photocopier and workstation against the same security system can be achieved by other means. Swipe cards, thumb print recognition, etc. could also be used. Further, the security program that verifies the log ins need not be on a server 14; the workstation and photocopier could cooperate and share a database of users and log in keys (e.g. passwords). The security program could also be on several servers cooperating to duplicate the ability to verify log ins of the users; in this case for example one server could verify the log in for the workstation and another for the photocopier - it would still remain that the users identity was verified for both the photocopier and the workstation against a common security system.

In the embodiment above the user's username is transmitted from the workstation to the photocopier together with the document to be printed. This therefore identifies the user directly. Clearly any other information identifying the user could be used , such as an ID number provided by the security system. However, other kinds of information may be used as long as it is sufficient to identify the user. For example if the photocopier has access to a list of which users are logged into which workstations (e.g. from the security program on the server) then the identity of the workstation that sent the document is sufficient to identify the relevant user.

In the embodiments described above, documents are added to the Personal Mailbox by being printed (i.e. sent to the photocopier 13 from a workstation 12. Documents may also be added to the Personal Mailbox by using the scanner 69 on the photocopier 13. The scanned documents so added are tagged as belonging to the user that is logged into the photocopier when the scan is made.

Note that although the embodiment works well with the particular mailbox storage described, it is applicable to other systems of storage of the documents on photocopier. For example a system in which all documents to be printed are placed in a simple queue in on the photocopier. In this case the application 25 would sort through the items on the queue to retrieve those belonging to a user. (The user would not have to select "Personal Mailbox" in the print driver interface, but would simply just print to the photocopier.)

One example of a different organisation of document storage on a photocopier is a Virtual Mailbox application which provides a mailbox store on top of the mailboxes 21 described above. This Virtual Mailbox application is described below and may be used with and works well with the Personal Mailbox application described above. The Personal Mailbox application uses a virtual mailbox store (to be described below) in place of its mailbox (e.g. mailbox "0") to store the users' documents.

The Virtual Mailbox application is claimed in a separate copending patent application.

The examples above have referred to a photocopier 13. The invention may equally be employed on other peripheral devices such as pinting devices, such as printers, all in one printer etc, and other peripheral devices, such as scanners and faxes.

The Virtual Mailbox application, which may be used by the Personal Mailbox for storage of the users documents is described as follows. A MEAP application "Virtual Mailbox" 27 is provided on the photocopier 13. This application is not visible to a user of the photocopier, but is used by other, client, MEAP applications installed on the photocopier, such as the Personal Mailbox application 25. (Preferably the Virtual Mailbox is implemented not as a stand alone application but rather a component which other applications use by creating an instance of it.) The Virtual Mailbox application 27 uses a number of the MEAP mailboxes to simulate a single large mailbox and preferably acts as an interface between the mailboxes 21 of the photocopier 13 and other MEAP applications 25, and simplifies the use of the mailboxes for those other MEAP applications 25, e.g. Personal Mailbox.

The Virtual Mailbox application works as follows. The application selects a mailbox on the device, in this case mailbox "0", and assigns it the name "In Box" and a PIN number. (Any name may be used, and in practice the name is supplied by the MEAP application that is using the Virtual Mailbox application, so in the case of the Personal Mailbox application "Personal Mailbox" is preferably used).

In a first embodiment, a further number of mailboxes are reserved by the Virtual Mailbox application (giving each a PIN number) as "Store Boxes". Preferably, the number of mailboxes reserved is in accordance with a prediction of the needs of the application using the Virtual Mailbox application. This prediction may be a setting provided by the user or may be calculated by the application 27 based on experience gained during previous runs of the Virtual Mailbox application. (Typically an instance of Virtual Mailbox application will be started each time a client application requiring it is started.)

In a second embodiment, only the In Box mailbox is reserved initially, and the initial and further Store Box mailboxes are reserved later if and when required.

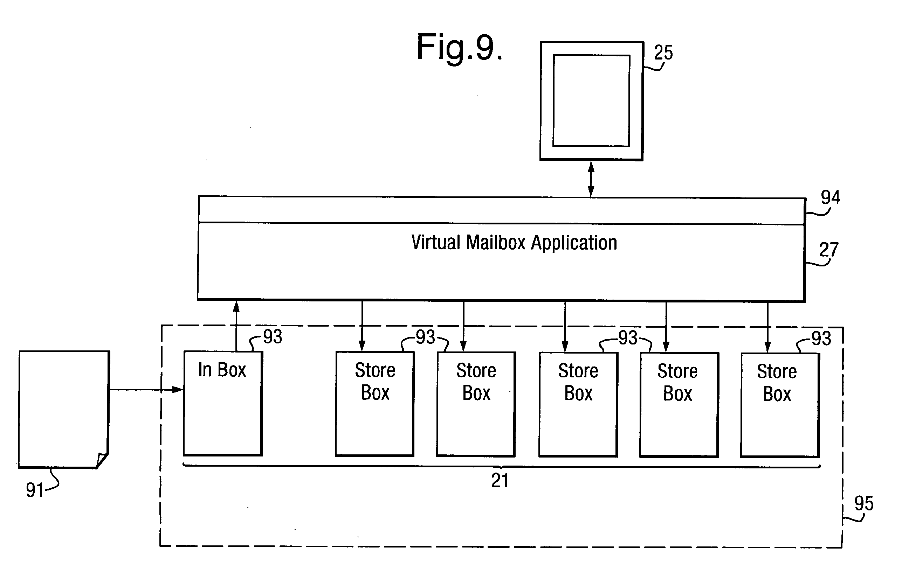

When a user of a workstation wishes to store a document 91 (see Figure 9) in the Virtual Mailbox, they select the In Box 92, mailbox "0", using the printer driver, as shown in Figure 3, and print to that mailbox. The reason why a user may want to store a document in the In Box may depend on the function of the particular client application 25 (or client applications) that are using the Virtual Mailbox. One client application that can use the Virtual Mailbox advantageously is an application, called Personal Mailbox, that is described and claim in detail in a copending patent application. Its use of the present Virtual Mailbox application is also described in detail in that copending application.

When the document "printed" (i.e. sent) by the user arrives in the In Box, the MEAP platform notifies the Virtual Mailbox application. (In order for this to occur the Virtual Mailbox application registers with the MEAP platform for that event when the Virtual Mailbox application is initialised.) As indicated schematically by the arrows in Figure 9, the Virtual Mailbox application then finds a Store Box 93 with space for the document 91, and moves the document from the In Box to that Store Box. The way in which this is done differs for the two embodiments mentioned above.

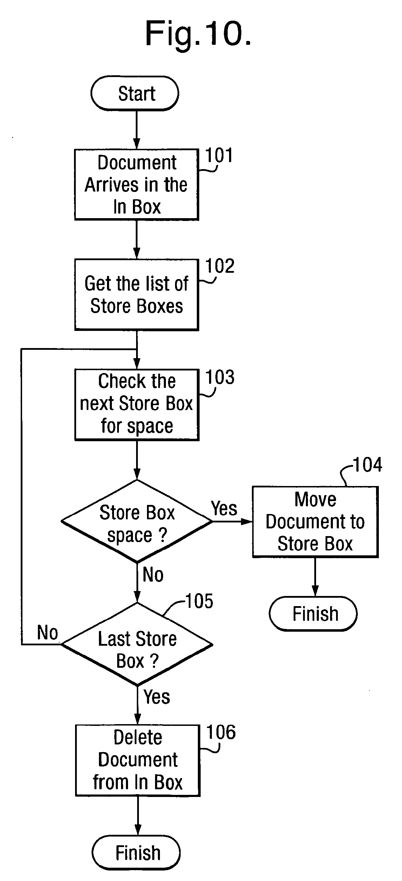

In the first embodiment, the Virtual Mailbox application works as shown in Figure 10. When the Virtual Mailbox application is notified by the MEAP platform that a document has arrived in the "In Box" (step 101), it gets a list of the Store Boxes it initially reserved (step 102). It then checks whether the first Store Box on the list has space for the document (step 103). If there is space in the Store Box, the Virtual Mailbox application moves the document form the In Box to that Store Box (step 104). It is then finished.

If the Store Box does not have space for the document, it checks whether that Store Box is the last in the list of reserved Store Boxes (step 105). If it is not the last, it returns to step 103, checks the next Store Box on the list, and continues as before.

If the Store Box is the last on the list, then there is nowhere for the document to be stored, and so the Virtual Mailbox application just deletes the document from the In Box (step 106)

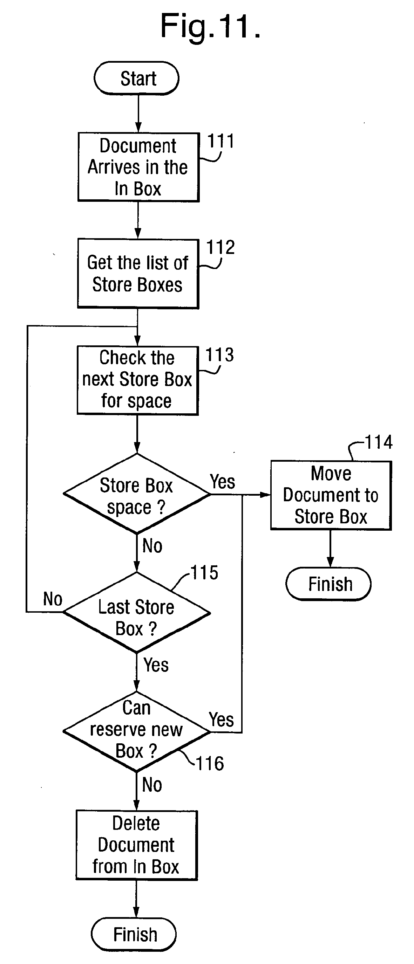

In the second embodiment, the Virtual Mailbox application works as shown in Figure 11. When the Virtual Mailbox application is notified by the MEAP platform that a document has arrived in the "In Box" (step 111), it gets a list of the Store Boxes it has reserved so far (step 112). It then checks whether the first Store Box on the list has space for the document (step 113). If there is space in the Store Box, the Virtual Mailbox application moves the document from the In Box to that Store Box (step 114). It is then finished.

If the Store Box does not have space for the document, it checks whether that Store Box is the last in the list of reserved Store Boxes (step 115). If it is not the last, it returns to step 113, checks the next Store Box on the list, and continues as before.

So far these steps are the same as in the first embodiment. However, if the Store Box is the last on the list, the Virtual Mailbox application now checks whether it is able to reserve a new mailbox as a Store Box (step 116). If it is able to, it then goes to step 114, and moves the document from the In Box to the newly reserved Store Box (step 114). It is then finished. If it is not able to reserve a new Store Box, then again there is nowhere for the document to be stored, and so the Virtual Mailbox application just deletes the document from the In Box (step 117).

Note that in the second embodiment the number of Store boxes reserved initially is one. In a third embodiment similar to the second, no Store Box is initially reserved but one is allocated when the first document arrives in the Inbox.

In a fourth embodiment, the Virtual Mailbox reserves two or more Store Boxes initially, but then reserves further Store Boxes if necessary.

In each of the embodiment described above the Virtual Mailbox application deletes a document if there is no room in the existing mailboxes or if a further mailbox cannot be reserved. Alternatively the Virtual Mailbox may simply leave a new document in the In Box if the Store Boxes are too full to receive it (or if no further Store Box can be reserved).

In another alternative applicable to all the embodiments the Virtual Mailbox can be arranged to keep documents in the Inbox until the Inbox is full or has reached a certain level of fullness (e.g. over a certain percentage. Once that limit is reached the Virtual Mailbox, on receipt of the next document into the Inbox, moves that document or one of the others in the Inbox to a Store Box.

Dynamic allocation of storage boxes is more efficient in the use of mailboxes 21 but can be a time consuming process (sufficient for delay to be noted by the user of the photocopier). Reservation of mailboxes as Store Boxes on initialisation of the Virtual Mailbox program avoids this problem.

Whatever method is used to organise the documents into the Store Boxes the Virtual Mailbox application 27 is preferably a service application for use by client application(s) 25, such as the Personal Mailbox application described above. The Virtual Mailbox application 27 therefore preferably provides an interface 94 enabling a client application access to the documents it stores. This collection of documents is known as the virtual mailbox 95 and includes the documents stored in the Store Boxes and preferably also any in the Inbox (either there temporarily before being transferred to a Store Box or otherwise). Preferably this interface hides the existence of the individual mailboxes from the client application 25 and therefore presents the virtual mailbox 95 to the client application 25 as a single unified storage area or mailbox.

In a preferred embodiment of the interface 26, it provides the following functions to the client applications.

First it enables them to retrieve a list of documents in the virtual mailbox (i.e. a list of all the documents in the virtual mailbox, i.e. a list of all the documents it stores - this includes all those stored in the Store Boxes reserved by the Virtual Mailbox application and preferably includes also any stored in the Inbox). This list it compiles from lists of the contents of each of the Store Boxes (and preferably the Inbox) provided by the standard functions of the MEAP platform. The list is in the form of a collection of document objects, each representing one of the documents and providing properties and methods providing the other functions of the interface 26 described below.

Second the interface provides a retrieval function for a particular document from the virtual mailbox. This is done simply by the client application selecting one of the document objects from the collection. The methods of the object (provided by the interface 25) then allow the client application to access the properties and content of the document. These methods make use of functions from the basic MEAP platform as required.

Third the interface provides a deletion function enabling the client application to delete a particular document from its mailbox; again the client application calls a method of the document object. The interface passes the call to the standard function for that provided by the MEAP platform. (In an alternative embodiment the interface provides a sepatate class for deleting documents.)

The interface stores in the internal representation of the document objects a handle for the document which allows its methods to locate the document in its mailbox 21.

The standard MEAP calls are quite complex so in this preferred embodiment the functions provided by the Virtual Mailbox application are have simpler interfaces and simpler data returned. In an alternative embodiment they are made identical to the equivalent functions of the MEAP platform (which of course are for accessing a single original mailbox 21) - or as identical as possible. This simplifies recoding of a client application in order to use the Virtual Mailbox application. In another alternative embodiment the Virtual Mailbox application intercepts calls to the MEAP platform for accessing a mailbox 21 and performs its own equivalent functions instead on the virtual mailbox 95. This reduces or eliminates the amount of recoding needed of a client application 25.

So far there has been described the use of the Virtual Mailbox application 27 is by a single client application. For that, or for use by multiple client applications, preferably each client application creates its own instance of the Virtual Mailbox application when it is started.

In an alternative embodiment a single stand alone Virtual Mailbox application is started when the photocopier is started. In this case, when a first client application 25 requests the Virtual Mailbox application 27 to create a virtual mailbox 95, this it does by reserving an In box and giving that the the name supplied by the client application and reserving any Store Boxes. Users at workstations 12 may then print documents to that Inbox - for which they will see the name supplied by the client application. The client application should, of course, choose a name appropriate to the function it provides.

When another client application requires the use of a virtual mailbox 95 it also makes a request to the Virtual Mailbox application 27. This responds by setting up another virtual mailbox 95 with its own Inbox 91 (called by the name given by this other client application) and its own Storage Boxes 93.

If the other client application requests a mailbox be created that has the same name as an existing one then the Virtual Mailbox application 27 does not set up another. Since the client applications when making requests for access to documents in a virtual mailbox 95 identify the virtual mailbox 95 for which those request are made, two or more applications can share a virtual mailbox 95, which is useful where two or more client provide related functions.

Note also that a client application may create more than one virtual mailbox.

In an alternative arrangement, when a client application wishes to have use of a virtual mailbox 95 it instantiates its own instance of the Virtual Mailbox application and uses that to create its own virtual mailbox(es). In this arrangement the sharing of virtual mailboxes between client applications is more difficult to arrange.

Although the virtual mailbox has been described with regard to the mailboxes of Canon photocopiers, it is equally applicable to any device having stores of limited capacity.

## Claims

1. A document mailbox software application for use on a peripheral device (13), the application being arranged, when executed on the peripheral device (13), to perform the following steps:
logging in a user to the peripheral device (13), the log in identifying the user against an electronic user identity system (15),
selecting, from documents, in electronic form, stored in the peripheral device (13), documents that have associated information sufficient to imply that the documents belong to the logged in user as identified,
allowing the logged in user access to the selected documents,
wherein the associated information implies that the documents belong to the logged in user as identified against an electronic user identity system (15) identifying the user with the associated information, and wherein the electronic user identity system (15) is located on another device (14).

2. A software application as claimed in claim 1 wherein the software application allows the logged in user to print a selected document.

3. A software application as claimed in claim 1 or claim 2, wherein the information implying a user sent a document identifies the user directly.

4. A software application as claimed in claim 3 wherein the information implying that a user that sent a document is a username.

5. A software application as claimed in any preceding claim, wherein the other device on which the electronic identity system (15) used to verify the identity of the user for the software application is located is a network server computer (14).

6. A software application as claimed in any preceding claim, wherein the step of logging in the user performed by the software application comprises displaying a log in dialog on a display screen of the printing device (13) for the user to complete.

7. A software application as claimed in any preceding claim wherein the step of logging in the user performed by the software application includes obtaining a username.

8. A software application as claimed in any preceding claim wherein the step of selecting performed by the software application is from documents where the associated information identifying the user was sent with its document from the other device.

9. A software application as claimed in any preceding claim wherein the step of selecting preformed by the software application includes obtaining a list of documents having associated information sufficient to imply that each document was sent by a particular user, the list including documents for a plurality of different users, and selecting the documents sent by the logged in user from that list.

10. A software application as claimed in any preceding claim, wherein the documents are sent to the peripheral device (13) from another device (12).

11. A software application as claimed in one of claims 1 to 9, wherein the documents are made by a scanner unit of the peripheral device (13).

12. A method of a peripheral device (13) connected to another device (14) via a network (11), the method comprising the steps of:
logging in a user to the peripheral device (12), the login identifying the user against an electronic user identity system (15),
selecting, from documents, in electronic form, stored in the peripheral device (13), documents that have associated information sufficient to imply that the documents belong to the logged in user, and
allowing the logged in user access to the selected documents,
wherein the associated information implies that the documents belong to the logged in user as identified against an electronic user identity system (15) identifying the user with the associated information, and wherein the electronic user identity system (15) is located on another device (14).

13. A peripheral device (13) connected to another device (14) via a network (11), the device comprising a controller arranged to perform the steps of:
logging in a user to the peripheral device (13), the log in identifying the user, the log in identifying the user against an electronic user identity system (15),
selecting, from documents, in electronic form, stored in the peripheral device (13), documents that have associated information sufficient to imply that the documents belong to the logged in user, and
allowing the logged in user access to the selected documents,
wherein the associated information implies that the documents belong to the logged in user as identified against an electronic user identity system (15) identifying the user with the associated information, and wherein the electronic user identity system (15) is located on another device (14).
